# EUROPÄISCHE PATENTANMELDUNG

(11) **EP 1 033 223 A1**
(43) Veröffentlichungstag der Anmeldung: **06.09.2000**
(21) Anmeldenummer: 00104344.7
(22) Anmeldetag: 02.03.2000
(51) Int. Cl.: B29C 45/14, B65F 1/14

(54) **Verfahren zum Einspritzen eines elektronischen Chips in einem Spritzgussteil in einem einzigen Spritzschritt**

(30) Priorität: 02.03.1999 DE 19909065
(71) Anmelder: SULO EISENWERK Streuber & Lohmann GmbH & Co. KG, 32051 Herford (DE)
(72) Erfinder: Pohl, Rolf, 88471 Laupheim (DE); Amon, Michael, 32469 Petershagen (DE)
(74) Vertreter: Alber, Norbert, Dipl.-Ing.

(57) **Zusammenfassung**

Die Erfindung betrifft das einfache und kostengünstige Einspritzen von elektronischen Chips in Spritzgußteile aus Kunststoff, insbesondere zwecks Anordnung des Chips an einem Müllbehälter. Ein erfindungsgemäßes Verfahren zum Anordnen eines elektronischen Chips in einem Kunststoff-Spritzgußteil kennzeichnet sich dadurch, daß der Chip als Einlegeteil in der Form für das Spritzgußteil verwendet und das Spritzgußteil in einem einzigen Spritzschritt hergestellt wird. Das Einspritzen eines elektronischen Chips in einem Spritzgußteil geschieht, indem der Chip gegenüber dem einen Formteil positioniert wird, die Formteile in Spritzlage zueinander gebracht werden, und der fließfähige Kunststoff in den Formhohlraum eingebracht wird, wobei der Chip so positioniert wird, daß der Kunststoff den Chip auf allen sechs Raumseiten erreichen kann.

## Beschreibung

### I. Anwendungsgebiet

Die Erfindung betrifft das Einspritzen von elektronischen Chips in Spritzgußteile aus Kunststoff, insbesondere zwecks Anordnung des Chips an einem Müllbehälter.

### II. Technischer Hintergrund

Wenn bisher ein elektronischer Chip in einem Kunststoffteil, welches primär durch Spritzgießen hergestellt wurde, unterzubringen war, so erfolgte dies in der Regel durch mehrere Arbeitsschritte, wobei der erste Schrift das Herstellen des Spritzgußeiles aus Kunststoff war, und in einem der weiteren Arbeitsschritte der Chip an oder in einer Aussparung dieses Spritzgußteiles verankert wurde.

Dabei wird unter einem Chip nicht nur der eigentliche Chip, also der z. B. integrierte Schaltkreis (IC), verstanden, sondem der Chip kann weitere elektronische Bauelemente wie Speicher, Sender/Transponder/Empfänger ebenso umfassen wie eine dieses Bauteil tragende oder umschließende Hülle, z. B. aus Glas oder Kunststoff.

Dieses Problem tritt vor allem bei der Ausstattung von als Kunststoffspritzteile hergestellten Müllbehältern mit einem Chip auf, was nur bei einem Teil der Müllbehälter gewünscht wird.

Dabei ist es prinzipiell bekannt, den Chip in einem separaten Aufnahmeteil unterzubringen, und dieses Aufnahmeteil dann kraftschlüssig oder formschlüssig am oder im eigentlichen Müllbehälter zu befestigen. Auch dabei stellt sich das Problem, daß es bisher nicht möglich war, in diesem ebenfalls als Kunststoff-Spritzgußteil hergestellten Aufnahmeteil den elektronischen Chip direkt beim Spritzvorgang des Aufnahmeteiles mit einzuspritzen.

Der Grund für diese arbeits- und zeitintensive Vorgehensweise lag in der Empfindlichkeit der Chips, die sowohl mechanisch nur sehr gering belastbar, insbesondere nicht auf Biegung belastbar, waren, und darüber hinaus selbst von allen Seiten gleichmäßig einwirkenden Umgebungsdrücken nur sehr begrenzt standhalten konnten. Ebenso durfte eine Temperatur von ca. 200°C nicht überschritten werden, da dies sonst zur Zerstörung des Chips geführt hätte.

Da jedoch beim Spritzgießen von Kunststoff, insbesondere von dem am häufigsten verwendeten thermoplastischen Kunststoff, der Kunststoff mit wesentlich mehr als 200°C und einem Druck von bis zu 700 bar in die Form eingeschossen wird, wurde bisher der Chip diesen Bedingungen beim Einspritzen nicht unterworfen, sondern nach Fertigstellung des Spritzgußteiles separat daran befestigt, entweder durch Einkleben in einem Hohlraum, oder Einspritzen in einem zweiten Spritzschritt, dann vorzugsweise entweder mit einer sehr geringen Menge eines Thermoplastes oder einem bei Raumtemperatur spritzbaren Duroplast, so daß mit geringer Temperatur und ohne oder geringem Druck gearbeitet werden konnte.

### III. Darstellung der Erfindung

### a) Technische Aufgabe

Da jeder zusätzliche Arbeitsschritt und die dabei benötigten Vorrichtungen den Herstellungsprozeß deutlich verteuern, ist es die Aufgabe der vorliegenden Erfindung, ein Verfahren sowie Vorrichtungen zu dessen Durchführung und damit ein fertiges Spritzgußteil zu schaffen, welches trotz des im Spritzgußteil unterzubringenden Chips einfach und kostengünstig durchführbar ist.

### b) Lösung der Aufgabe

Diese Aufgabe wird durch die kennzeichnenden Merkmale der Ansprüche 1, 2, 21 und 33 gelöst. Vorteilhafte Ausführungsformen ergeben sich aus den jeweiligen Unteransprüchen.

Die Einsparung von Arbeitsschritten wird erzielt, indem der Chip in einem einzigen Spritzschritt im Spritzgußteil mit eingespritzt wird. Durch die Umschließung des Chips durch den Kunststoff des Spritzgußteiles auf vier von sechs Raumseiten wird eine sichere Befestigung im Spritzgußteil erzielt. Um beim Spritzen ein Verschieben des Chips gegenüber der Form zu vermeiden, kann der Chip entweder durch Kraftschluß, z. B. mittels Magnet oder mittels des beim Spritzen ausströmenden Kunststoffes, vorzugsweise jedoch durch Formschluß auf möglichst vielen der sechs Raumseiten, vorzugsweise an fünf der sechs Raumseiten, lagefixiert werden, während die sechste Raumseite zum Einschieben des Chips benötigt wird. Auch auf der sechsten Raumseite kann eine formschlüssige Lagefixierung erzielt werden, vorzugsweise durch einen Anschlag, der von dem anderen Formteil aus vorsteht.

Bei plattenförmigen Chips oder langgestreckten Chips wird eine Anordnung bevorzugt, bei der der Chip nicht mit seiner Breitseite, sondern mit seiner Schmalseite, insbesondere seiner kleinsten Schmalseite, der Vordringrichtung des Kunststoffes beim Spritzgußvorgang entgegengerichtet ist. Wenn zusätzlich der Chip im Formhohlraum des Spritzgußteiles an einer möglichst weit von den Angußkanälen entfernten Stelle positioniert wird, hat sich die Temperatur des Kunststoffes auf dem Weg vom Angußkanal bis zu den am weitesten entfernten Stellen des Formhohlraumes bereits erheblich reduziert, und auch der auf diesem Weg eingetretene Druckverlust gegenüber dem an den Angußkanälen herrschenden Druck ist wesentlich niedriger. Insbesondere soll an der Position des Chips die Temperatur 300°C, vorzugsweise 260°C, vorzugsweise 200°C, nicht überschreiten, während die entsprechenden Druckhöchstwerte bei 40 MPa, insbesondere 28 MPa, insbesondere 22 MPa, liegen. Zusätzlich sollte der Chip an einem Rand des Spritzgußteiles angeordnet sein, da in diesem Bereich die Wärmeabfuhr durch die Formteile besonders gut ist. Statt dessen oder ergänzend hierzu sollten in der Umgebung des Chips die Formteile besonders gut von Kühlkanälen durchdrungen sein. Um das gewünschte Druck/Temperaturniveau am Chip nicht zu übersteigen, werden weiterhin Fließbremsen bzw. Engstellen im Vordringweg des Kunststoffes durch den Formhohlraum angeordnet.

Vorzugsweise wird dabei ein Chip verwendet, der wenigstens teilweise elastisch, insbesondere auf Biegung quer zu seiner Hauptebene elastisch beanspruchbar ist, und zu diesem Zweck beispielsweise aus mehreren parallel zu seiner Hauptebene verlaufenden und miteinander verbundenen Schichten besteht. Besonders, wenn die einzelnen Schichten kein polykristallines Silizium enthalten, ist eine Biegsamkeit möglich, ohne die Funktion des Chips zu beeinträchtigen. Insbesondere bestehen die elektrisch leitenden Schichten des Chips dabei aus Metall, insbesondere aus Kupfer, mit einer Dicke von weniger als 0,5 mm, insbesondere weniger als 0,3 mm, insbesondere weniger als 0,2 mm, während Zwischenschichten, insbesondere auch die äußeren Deckschichten, aus einem Kunststoff bestehen, die flächig mit den elektrisch leitenden Schichten verbunden, insbesondere verklebt, sind.

Die formschlüssige Lagefixierung des Chips in der Form geschieht beispielsweise durch eine Ausnehmung in einem der Formteile in Form einer Tasche, die wenigstens die in Einschubrichtung längsverlaufenden Schmalseiten des Chips umgreifen, und bei denen der Chip auf einer seiner Breitseiten wenigstens über einen Teil seiner Fläche durch das Formteil abgestützt wird.

Eine Möglichkeit ist eine Tasche, die die Querschnittsform eines Trapezes aufweist, entsprechend den sogenannten Schwalbenschwanz-Führungen im Werkzeugbau. Die Trapezform, die an ihrer schmaleren der beiden parallelen Seiten offen ist, ist dabei so dimensioniert, daß der Chip mit seiner kleinen Schmalseite voraus in die Trapezform eingeschoben werden kann. Zusätzlich sind in der abstützenden breiten Parallelfläche des Trapezes in Längsrichtung des trapezförmigen Querschnitts verlaufende Kanäle angeordnet, von denen wenigstens eine auch mit der offenen Seite der Tasche, also der Trapezform, in Verbindung stehen, indem sie sich abgewinkelt auch über das geschlossene Ende der Tasche hinweg erstrecken.

Die Summe der Querschnitte dieser Kanäle auf der abstützenden Breitseite dieses Trapezes sollte dabei geringer sein als der nach Einschieben des Chips verbleibende Restquerschnitt des Trapezes auf der den Kanälen gegenüberliegenden Seite des Chips. Ebenso sollte vorzugsweise der Weg des Kunststoffes vom nächstliegenden Angußkanal zu den Kanälen in der breiten Parallelseite des Trapezes gleich lang oder länger sein als zu dem Freiraum im Trapez auf der den Kanälen gegenüberliegenden Seite des Chips, um sicherzustellen, daß durch den vordringenden Kunststoff der Chip sicher gegen die Anlageflächen auf der breiten Parallelseite des Trapezes gedrückt wird, und nicht in Richtung auf die nicht abgestützte gegenüberliegende Breitseite.

Die größere Parallelfläche des trapezförmigen Querschnitts stellt damit hinsichtlich der Form die Auflagefläche für den Chip dar, wobei es sich anstelle der größeren Parallelseite des Trapezes auch um eine der größeren Seiten einer rechteckigen Querschnittsfläche einer anders geformten Tasche für den Chip handeln kann.

Die Trapezform bietet jedoch den Vorteil, daß die von der flächigen Anlagefläche abgewandten Längskanten des plattenförmigen Chips nur über Kantenberührung in der Form positioniert werden, so daß die Längsschmalseiten als auch die eine Breitseite des Chips vollständig zum Benetzen durch den Kunststoff zur Verfügung stehen und damit eine sichere Fixierung des Chips im Spritzgußteil gewährleisten.

Dies ist bei all denjenigen Querschnittsformen der aufnehmenden Tasche gegeben, die zur formschlüssigen Halterung des Chips neben den ersten, die Breitseite des Chips abstützenden, Anlageflächen wenigstens eine weitere im Winkel hierzu stehende Anlagefläche aufweisen.

Durch eine nur partiell abgestützte Breitseite des Chips ist sichergestellt, daß auch diese abgestützte Breitseite teilweise zur Benetzung durch den Kunststoff des Spritzgußteiles zur Verfügung steht, und dadurch insbesondere eine an manchen Stellen des Chips über seinen gesamten Umfang umlaufende Umschließung durch den Kunststoff des Spritzgußteiles gegeben ist.

Gerade bei streifenförmig parallel beabstandeten Anlageflächen der Breitseite ist dies gegeben, aber auch durch flächige einzelne Teil-Abstützflächen für die Breitseite. Weiterhin kann auch das gegenüber der aufnehmenden Tasche für den Chip andere Formteil der Form zusätzliche Abstützelemente und Abstützflächen zur Abstützung der zweiten Breitseite und/oder der in Einschubrichtung rückwärtigen Schmalseite des Chips aufweisen, so daß der Chip im Idealfall auf allen 6 Außenflächen - bei quaderförmiger Grundgestalt - bzw. auf allen 6 Raumseiten formschlüssig abgestützt ist.

Einzelne oder auch sämtliche formschlüssigen Abstützungen der 6 Raumrichtungen können auch durch eine magnetische Halterung des Chips ersetzt werden, indem im Formteil ein oder mehrere Magnete untergebracht sind, die in direkte Anlage mit dem Chip gelangen oder auch durch eine dünne Wandung des Formteiles hiervon getrennt bleiben, aber dennoch ihre magnetische Kraft auf den Chip ausüben können.

Durch die vorgenannten Maßnahmen läßt sich ein Spritzgußteil erzielen, welches einen darin eingespritzten Chip aufweist, der innerhalb des ersten und insbesondere einzigen Spritzschrittes auf vier Raumseiten fast vollständig, insbesondere vollständig, und auf höchstens zwei Raumseiten teilweise von Kunststoff umschlossen ist, also zumindest an manchen Stellen des Chips der Chip vollständig von Kunststoff umgeben ist und in diesen Querschnittsebenen keinerlei Kontakt zu einem der Formteile während des Spritzvorganges besitzt.

Insbesondere auf der oder den Raumseiten, auf denen der Chip nicht vollständig von Kunststoff abgedeckt ist, erstrecken sich entlang der Chipoberfläche vorzugsweise parallel laufende und/oder einander kreuzende und damit miteinander vernetzte Stege aus Kunststoff, die eine mechanisch sicht- und belastbare Einbindung des Chips in das Kunststofformteil ergeben. Dies ist z. B. möglich durch Stege, die sich abgewinkelt über sowohl eine der Breitseiten als auch eine der anschließenden Schmalseiten des Chips erstrecken.

Dabei sollte sich der Chip insbesondere an einer nach innen weisenden Stelle der Oberfläche des Spritzgußteiles befinden, also in einem Hinterschnitt, einer durch Stegwände erzielten Vertiefung oder Ähnlichem, um vor mechanischen Beschädigungen im Betrieb des Spritzgußteiles geschützt zu sein.

### c) Ausführungsbeispiele

Eine Ausführungsform gemäß der Erfindung ist im folgenden anhand der Figuren beispielhaft näher beschrieben. Es zeigen:
- Fig. 1:: einen Querschnitt durch die Form betrachtet in Einschubrichtung des Chips,
- Fig. 2:: eine Schnittdarstellung entlang der Linie II-II der Fig. 1,
- Fig. 3:: eine Schnittdarstellung entlang der Linie III-III der Fig. 1,
- Fig. 4:: eine Schnittdarstellung entlang der Linie IV-IV der Fig. 1,
- Fig. 5:: eine Schnittdarstellung entlang der Linie V-V der Fig. 1,
- Fig. 6:: eine perspektivische Darstellung des eingespritzten Chips,
- Fig. 7a:: ein anderes Spritzgußteil in einer ersten Seitenansicht,
- Fig. 7b, 7c:: die diesbezüglichen Formteile A', B' im Längsschnitt,
- Fig. 7d:: einen Querschnitt durch das Formteil A',
- Fig. 7e:: eine weitere Seitenansicht des Formteiles der Fig. 7a aus einem um 90° versetzten Blickwinkel,
- Fig. 8, 8':: eine Aufsicht auf das Formteil der Fig. 7a,
- Fig. 9:: eine Ansicht analog Fig. 7c, jedoch mit einem anderen darin aufgenommenen Chip 102' als Einlegeteil, und
- Figuren 10:: die Einbausituation des Formteiles 101 als Steckzapfen in einem Müllbehälter.

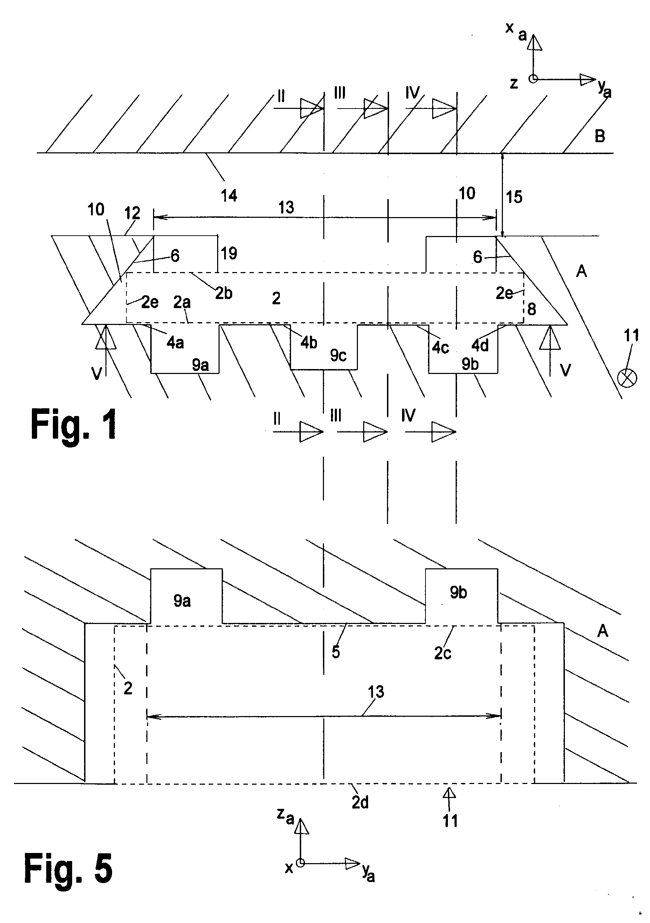

Fig. 1 zeigt die Formteile A und B in einer Querschnittsdarstellung im Bereich des einzuspritzenden Chips 2 in Spritzposition, also in der Position, in der der fließfähige Kunststoff in den Formhohlraum 10 zum Herstellen des Spritzgußteiles 1 eingespritzt wird. Der Chip 2 ist dabei bereits in Position gebracht.

Die Formteile A und B befinden sich dabei in einem Abstand zueinander, der der späteren allgemeinen Wandstärke 15 des Spritzgußteiles an dieser Stelle entspricht. Der Chip 2 ist dabei an einer Seite dieser Wand angeordnet, wobei dies vorzugsweise eine nach innen, in eine Kavität oder einen Hinterschnitt weisende Außenwand sein sollte, um im späteren Betrieb des Spritzgußteiles 1 eine Beschädigung des Chips zu vermeiden.

Der Chip 2 ist dabei im Formteil A in einer Tasche 8 aufgenommen, die in Verbindung zu dem die Wandstärke 15 des Formhohlraumes 10 bildenden Teil des Formhohlraumes über ihre Öffnung 13 in Verbindung steht, welche die schmale Seite des Querschnittes der Tasche 8 darstellt.

Dieser Querschnitt ist in Form eines Trapezes, also eines Schwalbenschwanzes, gestaltet mit zusätzlichen Vertiefungen in Form von Kanälen 9a, 9b, 9c in der Basis dieses Trapezes.

Das Trapez ist dabei so dimensioniert, daß der plattenförmige Chip 2 breiter ist als die obere Öffnung 13, jedoch in Längsrichtung in das Schwalbenschwanzprofil eingeschoben werden kann.

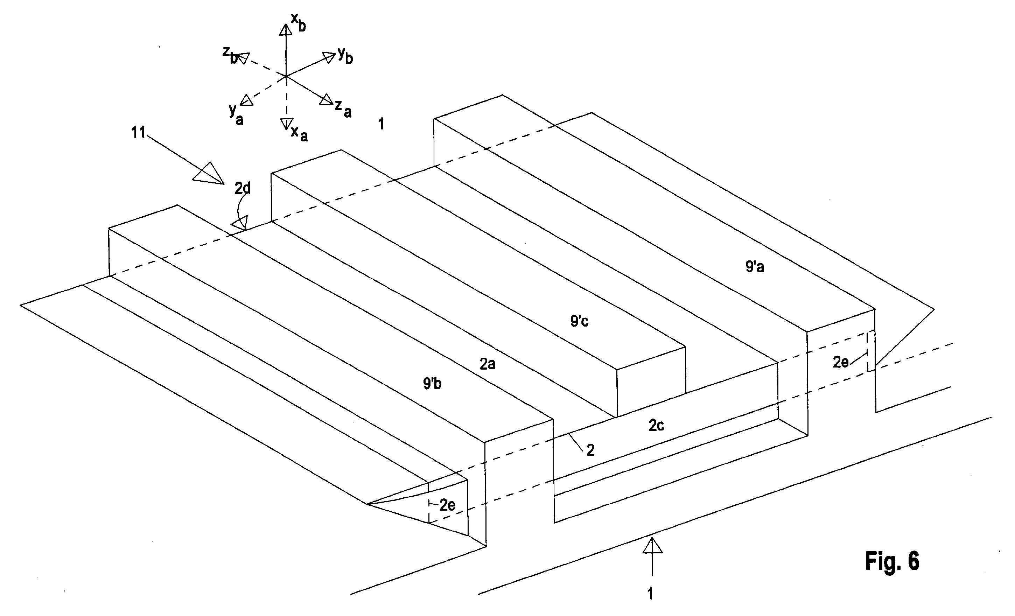

Die Blickrichtung der Fig. 1 ist somit gleichzeitig diejenige Richtung, in welcher der Chip 2 in die trapezförmige Tasche 8 eingeschoben wird, bis er in Vorwärtsrichtung am Ende der Tasche 8, der Anschlagfläche 5 der Darstellung gemäß Fig. 5, anliegt.

Die Kanäle 9a, 9b, 9c verlaufen dabei in Einschubrichtung des Chips 2, also in Blickrichtung der Fig. 1.

Der Chip 2 wird formschlüssig in der Tasche 8 gehalten, indem er einerseits an den Kanälen 9a, 9b, 9c verbleibenden Anlageflächen 4a, 4b, 4c, 4d der Basis der Trapez-Querschnittsform mit der Breitseite 2a anliegt. Die in Blickrichtung vertaufenden Längskanten der anderen Breitseite 2b befinden sich knapp unterhalb oder an den schrägen Anlageflächen 6 des trapezförmigen Querschnittes. Dadurch ist der Chip 2 sowohl in den Raumrichtungen Xa und Xb positioniert, als auch in den Raumrichtungen Ya, Yb. Dennoch bleiben die in Einschubrichtung verlaufenden Schmalseiten des Chips frei und für den Kunststoff des Spritzgußteiles zugänglich aufgrund des dort vorhandenen dreieckigen Freiraumes zwischen den schrägen Anlageflächen 6 und den Schmalseiten des Chips 2.

In Raumrichtung Zb erfolgt die Abstützung durch die in diese Richtung gerichtete Anlagefläche 5 am in Blickrichtung der Fig. 1 hinteren Ende der Tasche 8, wie in Fig. 5 dargestellt.

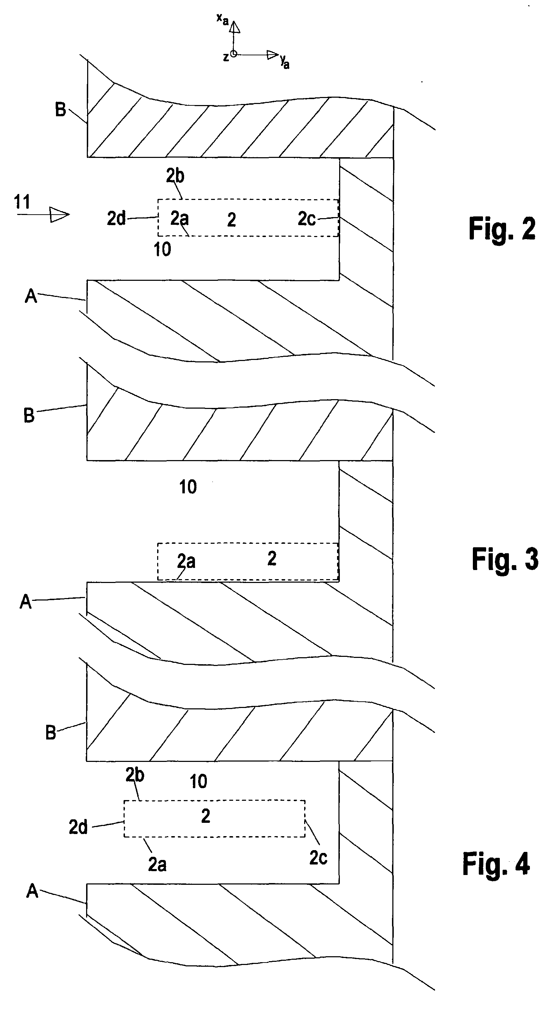

Um zu vermeiden, daß die hintere Schmalseite 2c des Chips nicht vollständig an dem Formteil A anliegt und damit in keinerlei Kontakt mit dem Kunststoff treten kann, sind die beiden äußeren Kanäle 9b nicht nur entlang der Anlagefläche 4 der Tasche 8 geführt, sondem erstrecken sich abgewinkelt auch in den Bereich der hinteren Anlagefläche 5 bis zur Oberfläche 12 des Formteiles A und stehen dort mit der Wandstärke 15, also dem Abstand zwischen den Formteilen A und B, in Verbindung. Die sich daraus ergebende Umschließung des Chips 2 mit Formhohlraum 10 und damit nach dem Verspritzen mit Kunststoff des Spritzgußteiles 1 läßt sich am besten anhand der parallel gelegten Schnittdarstellungen II-II, III-III und IV-IV erkennen, die in den Figuren 2, 3 und 4 dargestellt sind. Da sich die mittlere Nut 9c nur entlang der Anlagefläche 4, also dem Boden des Trapezquerschnittes der Tasche 8, erstreckt, liegt der Chip 2 - wie Fig. 2 zeigt - mit seiner Hinterkante 2c in diesem Bereich unmittelbar am Formteil A an, ist jedoch auf den Breitseiten 2a und 2b vom Formhohlraum 10 ebenso umschlossen wie an seiner Vorderkante 2d.

Im Bereich der Stützfläche 4c, also zwischen den Kanälen, liegt der Chip 2 - wie Fig. 3 zeigt - mit seiner Breitseite 2a zusätzlich auf dem Formteil A auf.

Im Bereich der im Winkel herumgeführten Kanäle 9a und 9b dagegen - wie Fig. 4 zeigt - ist der Chip 2 somit auf beiden Breitseiten 2a, 2b als auch an der vorderen und hinteren Schmalseite 2c, 2d und damit in dieser Darstellung vollständig von dem Formhohlraum 10 umgeben und damit später von Kunststoff. Dies ist anhand des fertigen Spritzgußteiles 1, welches die Fig. 6 in perspektivischer Ansicht zeigt, zu erkennen, in denen die beiden seitlichen, den Kanälen 9a, 9b entsprechenden, Stege 9a', 9b' den Chip 2 auf den Seiten 2a und 2c umschließen und mit ihren freien Enden einstückig in das übrige Spritzgußteil 1 übergehen, welches den Chip 2 ohnehin vollflächig an den beiden jeweils gegenüberliegenden Seiten 2b und 2d abdeckt, und auch an den Längskanten 2e.

Der mittlere Steg 9c' endet dagegen frei auslaufend an der Vorderkante 2c des Chips 2 und geht lediglich am gegenüberliegenden Ende, also an der Schmalseite 2d des Chips 2, in das Spritzgußteil 1 über.

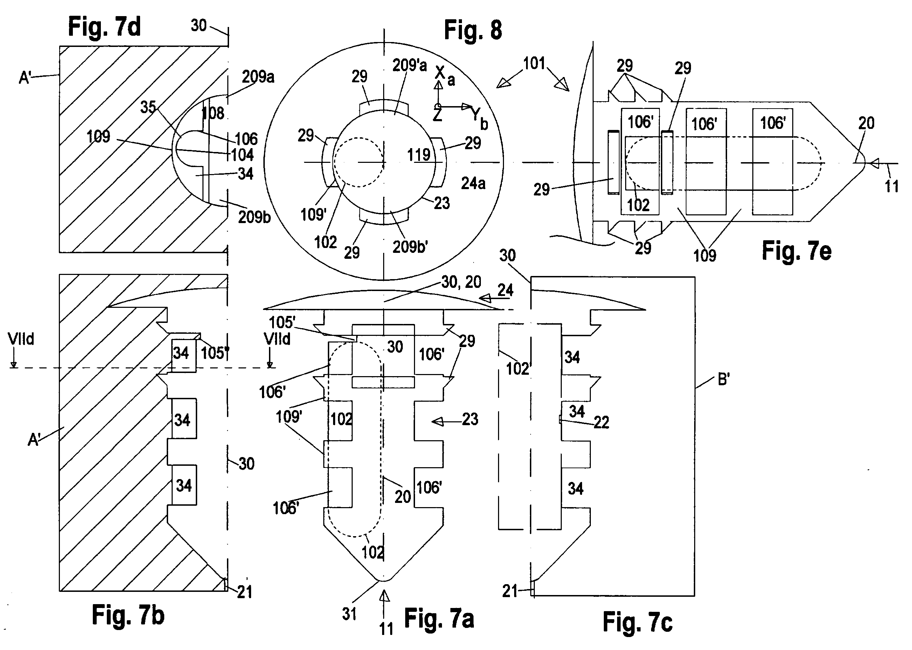

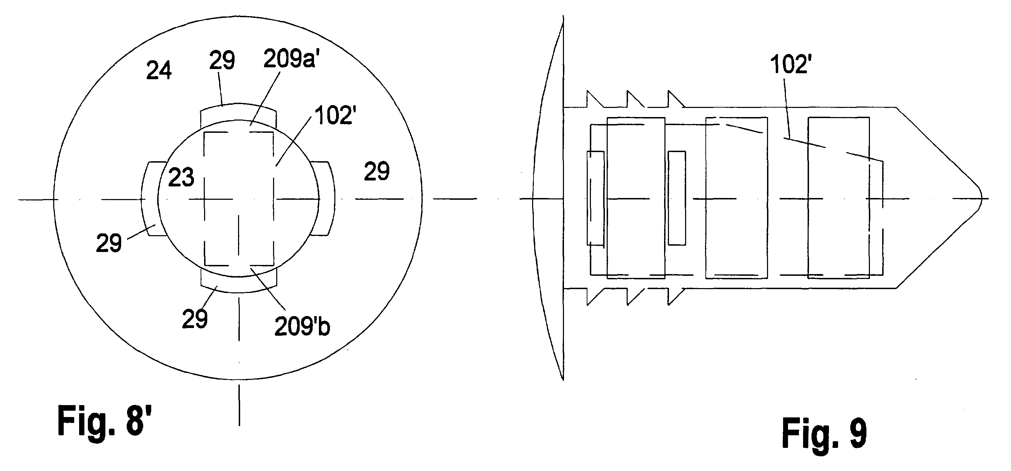

Fig. 7a und 8 zeigen das fertige Spritzgußteil 101 mit dem darin aufgenommenen elektronischen Chip 102, der beim einzigen Spritzgußvorgang zur Erzeugung des Spritzgußteiles 101 mit eingespritzt wurde.

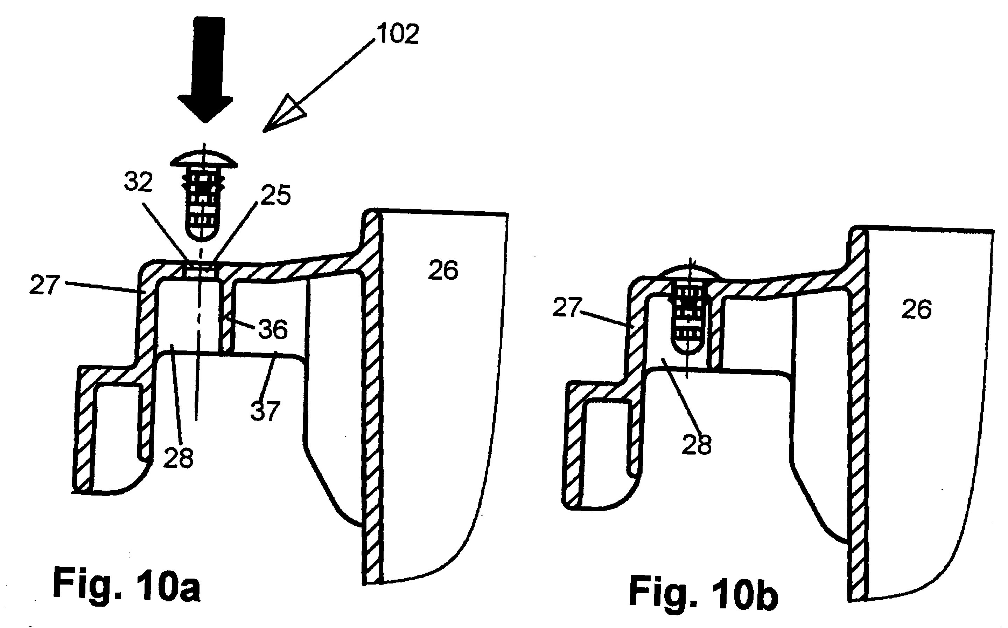

Das Spritzgußteil 101 ist ein Einsteckzapfen mit einem im wesentlichen zylindrischen Schaft 23 und einem demgegenüber am einen stirnseitigen Ende einstückig angeordneten, verbreiterten, linsenförmigen Hut 24. Durch die seitlich am Schaft 23 vorstehenden Rastnasen 29, die gemäß Fig. 8 in alle vier Richtungen von dem Schaft 23 abstreben, ist - wie näher anhand der Figuren 10 erläutert werden wird - ein Hindurchstecken des Einschubzapfens durch die entsprechende Bohrung in der Wandung eines anderen Bauteiles und das Verkrallen in dieser Wandung möglich.

Der Schaft 23 weist in seiner Längsrichtung 20 beabstandete, und jeweils von zwei gegenüberliegenden Seiten zur Mitte hin gerichtete Taschen 106' auf, die durch tangential in den Querschnitt des Schaftes 23 vorstehende Teile der Formteile A' durch B' gebildet werden.

Zwischen den Taschen 106' verbleibt ein mittiger Kern 33 ungeschwächten Querschnittes, der insbesondere dazu dient, dem Einsteckzapfen eine ausreichende Stabilität gegen Zusammenpressen in Längsrichtung 20 zu bieten.

Der in dem Spritzgußteil 101 unterzubringende elektronische Chip kann unterschiedliche geometrische Formen aufweisen.

In Fig. 7 und 8 ist die Aufnahme eines Chips 102 mit einer zylindrischen, länglichen, an den stirnseitigen Enden abgerundeten Form dargestellt, dessen Dicke knapp oder etwa der Hälfte der Dicke des Schaftes 23 entspricht, und dessen Länge geringer ist als die Länge des Schaftes.

In Fig. 9 ist die Anordnung eines plättchenförmigen Chips 102' mit unregelmäßiger, etwa rechteckiger Außenkontur dargestellt.

Das Ziel besteht darin, beide Bauformen des Chips mittels ein und derselben Formteile A', B' wahlweise im Spritzgußteil 101 aufnehmen zu können, die in den Figuren 7b - 7d dargestellt sind.

Die Kontaktfläche 30 dieser beiden Formteile A', B' verläuft dabei entlang der Längsmittelebene des Spritzgußteiles 101, also durch die stirnseitige Spitze 31 von dessen Schaft.

Dabei wird der zylindrische Chip 102 außermittig dieser Kontaktfläche 2, also praktisch vollständig in dem einen Formteil A', beim Umspritzen als Einlegeteil aufgenommen, während bei Aufnahme des plättchenförmigen Chips 102' dies mit der Hauptebene dieses Chips 102' auf der Kontaktfläche 30, also teilweise in der einen und teilweise in der anderen Formhälfte A', B' erfolgen muß, da die Breite dieses Chips 102' so groß ist, daß er nur in der Mitte des Schaftes 23 Platz findet.

Für den zylindrischen Chip 102 ist in der einen Formhälfte A' in den quer zur Längserstreckung des Spritzgußteiles 1 vorhandenen und zueinander beabstandeten Rippen 34, die tangential in den späteren Schaft 23 hinein vorstehen und dort die Taschen 106' bilden, in Längsrichtung über alle drei Rippen 34 fluchtend eine Rinne 35 mit halbkreisförmigem Querschnitt entsprechend einer Hälfte des Durchmessers des aufzunehmenden Chips 102 ausgeformt. Der Grund dieser Rinne 35 dient dabei als Anlagefläche 104 in Ya-Richtung und die Flanken dieser Rinne als Anlageflächen 106 in Xa und Xb-Richtung.

In Za-Richtung dient als Anschlagfläche 105 das stirnseitige Ende der Rinne 35 in derjenigen Rippe 34, die dem Hut 24 am nächsten liegt. Diese Anlagefläche 105 erstreckt sich dabei vorzugsweise als Fortsatz 105'' noch etwas weiter zur Kontaktfläche 30, also der Längsmitte des Spritzgußteiles 101, als die übrigen Rippen 34.

Das andere Formteil B' ist zum Formteil A' spiegelbildlich identisch bis auf die Unterschiede, daß in dem Formteil B' keine Rinne 35 für den Chip 102 vorhanden ist, und auch der Fortsatz 105'' nicht unbedingt vorhanden sein muß, jedoch vorhanden sein kann. Statt dessen können in der Formhälfte B' von einer oder auch von mehreren der Rippen 34 und deren vordersten, gegen die Kontaktfläche 30 gerichteten Ende ein weiterer nochmals demgegenüber geringfügig vorstehender Fortsatz 22 angeordnet sein.

Die Rippen 34 sowie die Fortsätze 105'' und 22 sind dabei so bemessen, daß bei gegeneinander gelegten Formhälften A', B' in Querrichtung (Y-Richtung) zwischen den Rippen 34 der Formhälften A', B' bzw. zwischen den Fortsätzen 22 und den gegenüberliegenden Rippen 34 oder deren Fortsätzen 22 gerade der plattenförmige Chip 102' Platz findet, der dann zusätzlich in Xa-Richtung wiederum durch den Fortsatz 105'' lagefixiert wird. In X-Richtung wird dieser plattenförmige Chip 102' nicht fixiert, hat aber aufgrund seiner Erstreckung in diese Richtung, die nur geringfügig kleiner ist als der Durchmesser des Schaftes 23, nur geringe Bewegungsmöglichkeit.

Aufgrund des in Blickrichtung der Fig. 8, also in Längsrichtung des Spritzgußteiles 101, rechteckigen Querschnittsform des plattenförmigen Chips 102' befindet sich - selbst wenn dieser Chip 102' mit einer seiner Längskanten an einer der Formhälften A', B' anliegt, immer noch ein Kanal 209'a entlang dieser Schmalseite des Chips 102' in dessen Längsrichtung entlang des Schaftes.

Der zylindrische Chip 102 wird dagegen in Yb-Richtung nicht formschlüssig durch das Formteil B' abgestützt, und ebenso wenig in Zb-Richtung. Seine Lage während des Spritzvorganges behält er dadurch bei, daß der Angußkanal 21 auf der Längsmitte des Spritzgußteiles 1, also auf der Kontaktfläche 30, und an der Spitze des freien Endes des Schaftes 23 liegt. Die größte Querschnittsfläche für das Vordringen des Kunststoffes bietet sich dadurch in Fig. 8 auf der rechts vom Chip 101 liegenden Seite im Schaft 23, so daß der dort vordringende Kunststoff den Chip 102 beim Vordringen permanent in der Rinne 35 des Formteiles A' hält, und aus diesem Grunde der Spritzvorgang auch mit horizontal liegender Kontaktfläche 30 und diesbezüglich unten liegender Formhälfte A' mit dem Chip 102 vorgenommen wird. In dem zwischen dem Chip 101 und der Außenfläche verbleibenden Kanal 109 dringt der Kunststoff dann nach Vordringen in Längsrichtung bzw. gleichzeitig hierzu durch radiales Vordringen ein.

Bei Verwendung des plattenförmigen Chips 102' erfolgt das Vordringen des Kunststoffes primär anhand der außerhalb der Längsschmalseiten des Chips 102' verbleibenden Kanäle 209'a, 209'b.

Somit sind in beiden Fällen in Längsrichtung des Schaftes 23 verlaufend durchgehende Kunststoffstege beim fertigen Spritzgußteil 101 vorhanden, die es erlauben, beim späteren Einschieben des Spritzgußteiles 101 Druck auf den Hut 24 auszuüben, um die Spitze 31 vorwärtszutreiben, ohne daß dadurch zu starke Kräfte auf den im Spritzgußteil 101 befindlichen Chip 102, 102' übertragen werden und dieser beschädigt oder zerstört würde.

Die Rastnasen 29 sind dabei - wie allgemein bekannt - mit ihrer Schräge der Einschubrichtung entgegengerichtet, und verfügen auf ihrer Rückseite über eine im 90°-Winkel zur Längsrichtung des Spritzgußteiles verlaufende Rückhaltefläche.

Die Nasen 29 erstrecken sich über jeweils ca. 45 - 60° pro Viertelkreis, und stehen insbesondere - in Längsrichtung beabstandet - sowohl vom ersten als auch vom zweiten sich an den Hut 24 anschließenden Steg 109' als auch den hierzu um 90° versetzten, in Längsrichtung durchgehenden Stegen 209' nach außen ab.

Eine Anwendung des Einschubzapfens zeigen die Figuren 10a, 10b. Darin ist der Randbereich eines Müllbehälters 26 mit dem nach außen überstehenden und nach unten gekröpften Kragen 27 dargestellt, der durch zusätzliche Rippen 36, 37 versteift ist, und dadurch nach unten offene Taschen 28 bildet.

Um den einen Chip 102, 102' enthaltenden Einschubzapfen in diesen Müllbehälter 26 zu befestigen, kann dieser in eine entsprechende Bohrung 25, vorzugsweise angeordnet in der Oberseite des Kragens 27, so eingeschoben werden, bis der Hut 24 des Einschubzapfens plan auf der Oberseite des Kragens aufliegt, so daß sich der Schaft 23 in die nach unten offene Tasche 28 hinein erstreckt.

Die Rastnasen 29 verhaken sich dabei an der Unterseite des Kragens, so daß ein Zurückziehen ohne Zerstörung des Zapfens nicht möglich ist.

Um mit oder ohne eingesetztem Zapfen das gleiche Aussehen des Müllbehälters zu gewährleisten, wird anstelle einer Durchgangsbohrung 25 bei der Herstellung des Müllbehälters hier vorzugsweise nur eine starke Verdünnung des Wandquerschnittes erzeugt, also anstelle einer Durchgangsbohrung 25 eine von der Unterseite in die Wandung eingebrachte Vertiefung, so daß die Oberseite des Kragens von einer dünnen durchgehenden Haut 32 verschlossen bleibt, so daß die vorgesehene Position für das Einschieben des Bolzens optisch von außen oben nicht ersichtlich ist. Durch Eindrücken des Bolzens mit der Hand oder auch Einschlagen mit einem Hammer wird die Haut von der Spitze 31 des Schaftes 23 durchstoßen. Die dabei in die entstehende Durchgangsöffnung hineingezogene Haut 32 dient zusätzlich der Erhöhung der Flächenpressung und Verbesserung der Haltekraft des Zapfens im Müllbehälter.

### BEZUGSZEICHENLISTE

- A, B: Formteil
- 1, 102, 102': Spritzgußteil
- 2, 2', 2'': elektronischer Chip
- 2a, 2b: Breitseite
- 3: Kante
- 4a, 4b, 4c, 104: Anlagefläche
- 5, 105: Anlagefläche
- 6, 106: Anlagefläche
- 7: Magnet
- 8: Tasche
- 9, 109, 209: Kanal
- 9', 109': Steg
- 10: Formhohlraum
- 11: Vordringrichtung
- 12: Oberfläche
- 13: Öffnung
- 14: Wand
- 15: Wandstärke
- 16: Schrägfläche
- 19, 119: Kanal
- 20: Längsrichtung
- 21: Angußkanal
- 22: Fortsatz
- 23: Schaft
- 24: Hut
- 25: Bohrung
- 26: Müllbehälter
- 27: Kragen
- 28: Tasche
- 29: Rastnase
- 30: Kontaktfläche
- 31: Spitze
- 32: Haut
- 33: Kern
- 34: Rippe
- 35: Rinne
- 36, 37: Rippen

## Patentansprüche

1. Verfahren zum Anordnen eines elektronischen Chips in einem Kunststoff-Spritzgußteil,
**dadurch gekennzeichnet, daß**
der Chip als Einlegeteil in der Form (A, B) für das Spritzgußteil verwendet und das Spritzgußteil in einem einzigen Spritzschritt hergestellt wird.

2. Verfahren zum Einspritzen eines elektronischen Chips (2, 2', 2'') in einem Spritzgußteil (1), indem
- der Chip (2) gegenüber dem einen Formteil (A) positioniert wird,
- die Formteile (A, B) in Spritzlage zueinander gebracht werden, und
- der fließfähige Kunststoff in den Formhohlraum (10) eingebracht wird,
**dadurch gekennzeichnet, daß**
der Chip (2) so positioniert wird, daß der Kunststoff den Chip (2) auf allen sechs Raumseiten (Xa, Xb, Ya, Yb, Za, Zb) erreichen kann, und/oder insbesondere das Positionieren des Chips (2, 2', 2'') in der Form durch Formschluß auf vier Raumseiten (Xa, Xb, Ya, Yb), auf insbesondere fünf Raumseiten (Xa, Xb, Ya, Yb, Za) der insgesamt sechs Raumseiten geschieht, und/oder insbesondere der Chip (2) eine langgestreckte Form oder die Form einer Platte aufweist und so angeordnet ist, daß seine, insbesondere in Vordringrichtung (11) planen, Breitseiten (2a, 2b) parallel zur Vordringrichtung (11) des Kunststoffes im Formhohlraum (10) um den Chip (2) herum liegen und insbesondere der Chip so angeordnet ist, daß seine kleinste Schmalseite (2c) der Vordringrichtung (11) des Kunststoffes entgegengerichtet ist, und/oder insbesondere der Chip (2) im Formhohlraum (10) für das Spritzgußteil (1) an einer möglichst weit von den Angußkanälen der Form entfernten Stelle angeordnet wird, und/oder insbesondere der Chip (2) nahe eines Randes des Spritzgußteiles (1) angeordnet ist, und/oder insbesondere der Chip (2) an einer solchen Stelle in der Form positioniert wird, die durch Kühlkanäle in den Formteilen möglichst gut gekühlt werden kann, und/oder insbesondere beim Spritzen mit einem thermoplastischen Kunststoff der Kunststoff den Chip (2) erst erreicht, wenn er sich auf eine Temperatur von unter 300°C, vorzugsweise unter 260°C, vorzugsweise unter 230°C abgekühlt hat, und/oder insbesondere beim Spritzen der am Chip auftretende Druck unter 40 MPa, insbesondere unter 28 MPa, insbesondere unter 22 MPa bleibt.

3. Verfahren nach einem der vorhergehenden Ansprüche,
**dadurch gekennzeichnet, daß**
in Vordringrichtung (11) des Kunststoffes stromaufwärts der Position des Chips Fließbremsen und/oder Engstellen für den fließfähigen Kunststoff angeordnet sind, um die einzuhaltenden Druckwerte bzw. Temperaturwerte an der Position des Chips nicht zu überschreiten und das hierfür notwendige Druckgefälle bzw. Temperaturgefälle von den Angußkanälen bis zur Position des Chips (2) zu erzielen, und/oder insbesondere der Chip (2, 2', 2'') auf einer seiner Breitseiten (2a) von Anlageflächen (4a, 4b, 4c) eines Formteiles (A) abgestützt wird, die durch Kanäle (9a, 9b, 9c, 109) voneinander getrennt sind, während die gegenüberliegende Breitseite (2b) des Chips (2, 2', 2'') mit der demgegenüber beabstandeten Wand eines Formteiles (B) einen über die ganze Breite des Chips (2) verlaufenden Kanal (19, 119) bildet, und/oder insbesondere der Kanal (19, 19') und die Kanäle (9a, 9b, 9c, 9a') wenigstens an der in Einschubrichtung des Chips (2) offenen Seite einer Tasche (8) des Formteiles (A) miteinander in Verbindung stehen, und/oder insbesondere der quer zur Vordringrichtung (11) betrachtete Querschnitt des Kanals (19) gleich oder größer ist als die Summe der Querschnitte der Kanäle (9a, 9b, 9c) auf der gegenüberliegenden Breitseite des Chips, und/oder insbesondere der Weg des Kunststoffes vom nächstliegenden Angußkanal zum Kanal (19, 19') gleich lang oder kürzer ist als der Weg zu den Kanälen (9a, 9b, 9c, 109).

4. Verfahren nach einem der vorhergehenden Ansprüche,
**dadurch gekennzeichnet, daß**
der Chip (2) begrenzt elastisch, insbesondere auf Biegung quer zu seiner Hauptebene elastisch, ist, und/oder insbesondere der Chip (2', 2'') unelastisch, insbesondere mit Glas ummantelt, ist, und/oder insbesondere der Chip (2) aus mehreren in seiner Hauptebene verlaufenden und parallel zueinander angeordneten und miteinander verbundenen Schichten besteht, wenigstens eine der Schichten des Chips eine Schicht aus elektrisch leitendem Metall, insbesondere aus Kupfer, mit einer Dicke von weniger als 0,5 mm, insbesondere von weniger als 0,3 mm, ist, und/oder insbesondere wenigstens eine der Schichten, insbesondere wenigstens eine der äußeren Schichten, insbesondere beide äußeren Schichten, des Chips (2) aus Kunststoff bestehen, die flächig mit den weiter innen liegenden Schichten verbunden, insbesondere verklebt, sind, und/oder insbesondere der Chip (2) kein polykristallines Silizium enthält.

5. Form, insbesondere zur Durchführung des Verfahrens nach einem der vorhergehenden Ansprüche mit weiteren zwei Formteilen (A, B),
**dadurch gekennzeichnet, daß**
- das eine Formteil (A) wenigstens eine Anlagefläche (4) für den Chip (2) aufweist,
- sowie eine Positioniervorrichtung zum Positionieren des Chips (2) bezüglich des Formteiles (A).

6. Form nach Anspruch 5,
**dadurch gekennzeichnet, daß**
die Positioniervorrichtung ein im Formteil (A) angeordneter Magnet (7) ist, und/oder insbesondere die Positioniervorrichtung wenigstens eine weitere, im Winkel zur ersten Anlagefläche (4) stehende, Anlagefläche (5. 6) ist, und/oder insbesondere wobei der Chip (2) die Form einer Platte besitzt, die gegen die eine Breitseite (2a) gerichtete Anlagefläche (4) mehrteilig (4a, 4b, 4c, 4d) ausgebildet ist, und/oder insbesondere die Anlageflächen (4a, 4b, 4c 4d) streifenförmig parallel beabstandet zueinander liegen.

7. Form nach einem der vorhergehenden Vorrichtungsansprüche,
**dadurch gekennzeichnet, daß**
die Anlageflächen (4, 5, 6) im Formteil (A) eine Tasche (8) bilden, die so dimensioniert ist, daß der darin unterzubringende Chip (2) nur in einer Raumrichtung (Za) in die Tasche (8) einschiebbar ist und durch die Anlageflächen der Tasche (8) in allen übrigen Raumrichtungen (Xa, Xb, Ya, Yb) formschlüssig gehalten wird, und/oder insbesondere weitere Anlageflächen (6) an der von der abgestützten Breitseite (2a) gegenüberliegende Außenkanten, welche parallel zu den Anlageflächen (4a, 4b, 4c, 4d) verlaufen, abstützen, und/oder insbesondere die Tasche (8) die Querschnittsform einer Schwalbenschwanzführung aufweist, insbesondere mit vertieften Kanälen (9) im Boden des Schwalbenschwanzes parallel zu den Seiten der Schwalbenschwanzführung verlaufend, und/oder insbesondere wenigstens einer der Kanäle (9a, 9b) sich auch auf der von der Einschubseite der Tasche (8) gegenüberliegenden Ende der Tasche (8) herum erstreckt, und/oder insbesondere die Tiefe der Tasche (8) quer zur Einschubrichtung größer ist als die Dicke des Chips (2).

8. Form nach einem der vorhergehenden Vorrichtungsansprüche,
**dadurch gekennzeichnet, daß**
die dem anderen Formteil (B) zugewandte Öffnung (13) der Tasche (8) schmaler ist als die Breite des in der Tasche (8) unterzubringenden Chips (2).

9. Form nach einem der vorhergehenden Vorrichtungsansprüche,
**dadurch gekennzeichnet, daß**
die Kanäle (109) sich quer zur Vordringrichtung (11) des Kunststoffes erstrecken und insbesondere der Chip (2, 2') exzentrisch zur Mitte der Vordringrichtung (11) des Kunststoffes angeordnet ist.

10. Form nach einem der vorhergehenden Vorrichtungsansprüche,
**dadurch gekennzeichnet, da**ß
Kanäle (109a, 109b) sich auf gegenüberliegenden Seiten des Chips (102) entlang dessen gesamter Längserstreckung, insbesondere auf zwei bezüglich des Chips (102) diametral gegenüberliegender Seiten entlang erstrecken, und/oder insbesondere sich die Kanäle (209a, 209b) entlang der Vordringrichtung (11) des Kunststoffes erstrecken, und/oder insbesondere sich die Kanäle (209a, 209b) beidseits der Kontaktfläche (30), also jeweils zum Teil im ersten Formteil (A') und zum Teil im zweiten Formteil (B'), befinden, und/oder insbesondere die Formteile (A', B') auf der Längsmitte des Spritzgußteiles (101) mit ihren Kontaktflächen (30) gegeneinander gepreßt werden und insbesondere der Angußkanal (21) auf der Längsmitte des Spritzgußteiles (101) angeordnet ist, und/oder insbesondere das andere Formteil (B) gegen den Chip (2) und in die Tasche (8) vorstehende wenigstens einen Fortsatz zum Abstützen des Chips (2) aufweist.

11. Spritzgußteil (1) mit einem elektronischen Chip (2) als umspritzten Einlegeteil,
**dadurch gekennzeichnet, daß**
der Chip (2) vom Kunststoff des ersten Spritzschrittes des Spritzgußteiles (1) von vier Raumseiten (Xb, Ya, Yb, Za) fast vollständig und auf zwei Raumseiten (Xa, Zb) teilweise umschlossen ist.

12. Spritzgußteil (1) nach Anspruch 11,
**dadurch gekennzeichnet, daß**
der Chip (2) auf den nur teilweise vom Kunststoff eingeschlossenen Seiten von wenigstens einem Steg (9a', 9b', 9c') kontaktiert ist, welche jeweils auf einer ihrer Stirnseiten einstückig in den Kunststoff auf einer der übrigen vier Raumseiten (Xb, Ya, Yb, Za) übergehen, und/oder insbesondere die Stege (9a', 9b') an beiden Stirnseiten einstückig in den Kunststoff wenigstens einer der vier Raumseiten (Xb, Ya, Yb, Za) übergehen, und/oder insbesondere die Stege (9a', 9b') gebogen oder abgewinkelt sind, und sich sowohl über eine Breitseite (2a), als auch über eine angrenzende Schmalseite (2c) des Chips (2) hinweg erstrecken.

13. Spritzgußteil (1) nach einem der vorhergehenden Spritzgußteilansprüche,
**dadurch gekennzeichnet, daß**
der Chip (2) an einer nach innen gewandten Außenfläche des Spritzgußteiles (1) angeordnet ist, und/oder insbesondere der Chip (2) an einer möglichst weit von allen Angußkanälen des Spritzgußteiles (1) entfernten Stelle angeordnet ist.

14. Spritzgußteil (1) nach einem der vorhergehenden Spritzgußteilansprüche,
**dadurch gekennzeichnet, daß**
das Spritzgußteil (101) im wesentlichen nach außen gewölbte, konvexe Außenflächen besitzt, insbesondere ein Einsteckteil ist, und der Chip (102, 102') nahe einer Außenwandung des Spritzgußteiles (101) mit seiner Längserstreckung parallel zur Längserstreckung des Spritzgußteiles, insbesondere außermittig zu dessen Symmetrieachse angeordnet ist.

15. Spritzgußteil (1) nach einem der vorhergehenden Spritzgußteilansprüche,
**dadurch gekennzeichnet, daß**
das Spritzgußteil (101) ein Einsteckzapfen mit einem Schaft (23) und einem demgegenüber verbreiterten Hut (24) ist und der elektronische Chip (102, 102') mit seiner Längsrichtung parallel zur Längsrichtung des Schaftes (23) in diesem Schaft, insbesondere außermittig, angeordnet ist, und/oder insbesondere die Außenwandung des Schaftes (23) Durchbrüche aufweist, durch die hindurch der elektronische Chip (102, 102') wenigstens teilweise sichtbar ist, und/oder insbesondere der elektronische Chip (102, 102') in einer von Glas vollständig umschlossenen Form als Einlegeteil im Spritzgußteil (101) verwendet wird.

16. Verwendung des Spritzgußteiles (101) nach einem der vorhergehenden Ansprüche,
**dadurch gekennzeichnet, daß**
das Spritzgußteil (101) als formschlüssig verrastbarer Steckbolzen in der Durchgangsöffnung eines anderen Bauteiles, insbesondere eines Müllbehälters, verwendet wird.

17. Verwendung des Spritzgußteiles (101) nach Anspruch 16,
**dadurch gekennzeichnet, daß**
die Durchgangsöffnung in dem nach außen vorstehenden und unten offenen Kragen des Müllbehälters angeordnet ist und das Spritzgußteil mit seinem Hut (24) plan auf der Oberseite des Kragens anliegt, während der Schaft (23) sich in die nach unten offene Tasche 28 des Kragens hineinerstreckt, und/oder insbesondere die Längserstreckung des Schaftes (23) geringer ist als die Höhe der Rippen (36, 37), die den Kragen versteifen.
